Europäisches Patentamt

European Patent Office

Office européen des brevets

(11) Numéro de publication: **0 333 559 B1**

# FASCICULE DE BREVET EUROPEEN

(45) Date de publication de fascicule du brevet: **20.10.93**  (51) Int. Cl.5: **B01J 23/89**, B01J 23/56, B01J 32/00, B01J 23/10

(21) Numéro de dépôt: **89400647.7**

(22) Date de dépôt: **08.03.89**

(54) **Support de catalyseur et catalyseur pour le traitement des gaz d'échappement des moteurs à combustion interne et procédé de fabrication de ceux-ci.**

(30) Priorité: **16.03.88 FR 8803385**

(43) Date de publication de la demande:
**20.09.89 Bulletin 89/38**

(45) Mention de la délivrance du brevet:
**20.10.93 Bulletin 93/42**

(84) Etats contractants désignés:
**AT BE CH DE ES FR GB GR IT LI LU NL SE**

(56) Documents cités:
**EP-A- 0 054 472**
**EP-A- 0 239 478**
**US-A- 3 925 253**
**US-A- 4 157 316**
**US-A- 4 274 981**

(73) Titulaire: **SOCIETE FRANCAISE DES PRODUITS POUR CATALYSE PRO-CATALYSE**
**4, avenue de Bois Préau**
**F-92502 Rueil Malmaison(FR)**

(72) Inventeur: **Prigent, Michel**
**11, rue des Marronniers**
**F-92500 Rueil Malmaison(FR)**
Inventeur: **Blanchard, Gilbert**
**5, allée des Acacias**
**Lagny-Le-Sec**
**F-60330 Le Plessis-Belleville(FR)**
Inventeur: **Garreau, François**
**23, rue du Borrego**
**F-75020 Paris(FR)**
Inventeur: **Courtil, Philippe**
**91, rue Condorcet**
**F-78800 Houilles(FR)**

(74) Mandataire: **Esson, Jean-Pierre et al**
**Rhône-Poulenc Interservices**
**Service Brevets Chimie**
**25, quai Paul Doumer**
**F-92408 Courbevoie Cedex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 333 559 B1

**Description**

La présente invention concerne un catalyseur pour le traitement des gaz d'échappement des moteurs à combustion interne, ainsi qu'un procédé de fabrication de celui-ci.

Elle concerne plus particulièrement un support de catalyseur du type monolithique dont le substrat inerte et rigide est revêtu par une couche de matière poreuse et un catalyseur obtenu par imprégnation de ce support par des éléments catalytiquement actifs.

Dans le domaine du traitement des gaz d'échappement des moteurs à combustion interne, en présence de catalyseur, on utilise généralement des catalyseurs appelés monolithiques. Ces catalyseurs comprennent un support rigide et inerte sur lequel est déposée une couche de matière poreuse, telle que par exemple de l'alumine, cette couche étant ensuite imprégnée par des éléments catalytiquement actifs. Un procédé de fabrication d'un tel catalyseur et plus particulièrement du support monolithique revêtu par une matière poreuse est décrit, notamment, dans le brevet européen n° 73703. Ainsi, ce procédé permet de déposer sur un substrat monolithique métallique ou en céramique réfractaire, une couche de matière poreuse, par exemple, de l'alumine.

Ce procédé prévoit également le remplacement partiel de l'alumine par d'autres oxydes métalliques.

Le brevet US-A-4 157 316 décrit ainsi un catalyseur comprenant un support monolithique sur lequel sont déposés de l'alumine, un métal du groupe du platine et un oxyde métallique tel que l'oxyde de nickel.

Par ailleurs, il est connu que les oxydes de terres rares et notamment l'oxyde de cérium, additionnés dans l'alumine formant le revêtement poreux, améliorent la stabilité thermique et l'efficacité du catalyseur (US-A-4 157 316). Cet effet est très important dans le domaine du traitement des gaz d'échappement des moteurs à combustion interne, dans lequel les catalyseurs sont portés à des températures élevées.

Il a également été proposé, notamment dans le brevet US-A-4 274 981, des supports de catalyseur monolithique dont le revêtement poreux est constitué par un aluminate métallique présentant une structure de spinelle tel qu'un aluminate de magnésium. Toutefois, ces revêtements qui ont une stabilité thermique convenable présentent l'inconvénient majeur d'avoir une surface spécifique très faible et donc ne permettant le dépôt que d'une faible quantité d'éléments catalytiquement actifs, ce qui diminue notamment la durée de vie des catalyseurs.

Les catalyseurs connus jusqu'à présent présentent l'inconvénient d'être très sensibles à la présence de soufre ou de composés soufrés dans les gaz d'échappement. En effet, le soufre joue le rôle de poison et diminue sensiblement la durée de vie de ces catalyseurs.

Dans le but, notamment de remédier à ces inconvénients, la demanderesse propose un support de catalyseur et un catalyseur pour le traitement des gaz d'échappement des moteurs à combustion interne présentant une bonne stabilité thermique et tolérant la présence de soufre ou de composés soufrés dans les gaz d'échappement.

Par "tolérant la présence du soufre", on entend que la durée de vie du catalyseur n'est pas affectée ou peu affectée par cet élément.

A cet effet, l'invention propose un support de catalyseur notamment pour catalyseur pour le traitement des gaz d'échappement des moteurs à combustion interne du type comprenant un substrat revêtu par une couche poreuse sur laquelle est imprégnée une phase catalytiquement active, caractérisé en ce que la couche poreuse comprend de l'alumine, au moins un oxyde de terre rare et un composé de type spinelle présentant une surface spécifique au moins égale à 50 m$^2$/g.

Par composés de type spinelle, on entend les oxydes métalliques mixtes répondant à la formule générale suivante :

$$M^1Al_2O_4$$

dans laquelle :

M$^1$ représente un élément métallique divalent choisi dans le groupe comprenant Zn, Ni, Mg, Co.

Selon une caractéristique préférée de l'invention, l'élément métallique M$^1$ divalent est le nickel ou le cobalt.

Les spinelles convenables pour l'invention sont les spinelles présentant une surface spécifique supérieure à 50 m$^2$/g, avantageusement comprise entre 50 m$^2$/g et 300 m$^2$/g.

A titre d'exemple, on peut citer comme spinelles convenables pour l'invention, les spinelles à base de magnésium, zinc et nickel.

Par ailleurs, ces spinelles peuvent être préparées, par exemple, par imprégnation d'une alumine à grande surface spécifique par une solution d'un sel de métal divalent. Le produit imprégné est ensuite séché et calciné à une température inférieure à 1000 °C. Le produit obtenu est broyé pour obtenir une taille

EP 0 333 559 B1

des particules convenables pour l'enduction d'un substrat.

Selon une autre caractéristique de l'invention, la composition pondérale de la couche poreuse est la suivante :

| - alumine | 15 % à 40 % |
| - oxydes de terres rares | 1 % à 25 % |
| - composé de type spinelle | 35 % à 84 % |

La composition préférée est :

| - alumine activée | 20 % à 40 % |
| - oxydes de terres rares | 5 % à 20 % |
| - composé de type spinelle | 40 % à 75 % |

Toutes les concentrations sont exprimées en pourcentage en poids à sec après calcination à 1000 °C pendant 4 heures, sauf indication contraire.

Les oxydes de terres rares convenables pour la présente invention sont les oxydes des éléments métalliques choisis dans le groupe des lanthanides et du cérium, l'oxyde de cérium étant l'oxyde préféré.

Les alumines convenables sont toutes celles utilisées habituellement en catalyse, notamment comme support, et par exemple, les alumines obtenues par déshydratation dans un courant de gaz chauds d'alumine hydratée telle que l'hydrargillite.

On peut également utiliser les alumines obtenues sous forme de gel, par exemple par précipitation carbonique.

L'invention a également pour objet un catalyseur pour le traitement des gaz d'échappement des moteurs à combustion interne, un support de catalyseur selon l'invention et une phase catalytiquement active imprégnée sur la couche poreuse du substrat.

Les catalyseurs utilisés dans le traitement des gaz d'échappement de moteur à combustion interne sont classés en deux catégories selon leur activité.

Une première catégorie est dite catalyseurs d'oxydation car ils catalysent l'oxydation des hydrocarbures imbrûlés et du monoxyde de carbone contenus dans les gaz, la seconde catégorie est appelée catalyseurs multifonctionnels car ils permettent d'éliminer les trois types principaux de composés polluants contenus dans les gaz d'échappement, à savoir les hydrocarbures imbrûlés, les oxydes d'azote et le monoxyde de carbone.

Les catalyseurs multifonctionnels contiennent généralement comme constituants de la phase catalytiquement active, un ou plusieurs métaux précieux associés éventuellement à un ou plusieurs métaux additionnels tels que, par exemple, le nickel, le fer, le zirconium, le vanadium, le chrome, le cérium, le tungstène, le manganèse, l'étain, le germanium, le cobalt, l'uranium, le rhénium ou les terres rares.

Ainsi, à titre d'exemple, le brevet européen n° 27069 décrit un catalyseur comprenant un support à base d'oxyde réfractaire et une phase catalytiquement active constituée de cérium, fer et d'au moins un métal pris dans le groupe comprenant l'iridium et le rhodium, et un métal pris dans le groupe comprenant le platine et le palladium.

Le brevet européen n° 54472 décrit un catalyseur multifonctionnel comprenant un substrat inerte en nids d'abeille revêtu par une couche ou pellicule d'oxyde réfractaire, la phase active étant constituée de cuivre, cérium ou fer, d'au moins un métal pris dans le groupe comportant le platine et le palladium et d'au moins un métal pris dans le groupe comprenant l'iridium et le rhodium.

La phase active est déposée ou imprégnée de façon uniforme sur la surface du support monolithique avec une solution de précurseurs des éléments de la phase active.

Quant aux catalyseurs d'oxydation, ils comprennent généralement un ou plusieurs métaux de la mine du platine tels que le platine et le palladium et éventuellement un ou plusieurs métaux additionnels tels que le nickel, le fer, le zirconium, le vanadium, le chrome, le cérium, le tungstène, le manganèse, l'étain, le germanium, le cobalt, l'uranium, le rhénium, les terres rares.

A titre d'exemple, on peut citer les catalyseurs décrits dans les brevets européens n° 100 267 et 145 584 de la demanderesse.

D'autres exemples de catalyseurs multifonctionnels ou d'oxydation sont donnés dans les brevets européens n° 60 740, 126 676 et 170 588 de la demanderesse.

3

Les substrats convenables pour l'invention sont des substrats réfractaires tels que par exemple des substrats métalliques ou en matière céramique.

Les substrats convenables pour l'invention sont notamment les substrats métalliques ou en matière céramique.

Les substrats en matière céramique sont, par exemple, ceux comportant comme matière principale la cordiérite, l'alumine, la mullite, la porcelaine, les carbures de bore ou de silicium.

Les substrats métalliques convenables sont notamment ceux obtenus à partir d'alliages de fer, de nickel et de chrome ou ceux obtenus à partir d'alliages de fer, de chrome, aluminium et cobalt tels que ceux connus sous la marque KANTHAL ou ceux obtenus à partir d'alliages de fer, de chrome, d'aluminium et d'yttrium connus sous la marque FECRALLOY. Le métal peut aussi être de l'acier carboné ou de la fonte simple.

On peut avantageusement prétraiter les substrats métalliques à base d'aluminium par chauffage en atmosphère oxydante dans des conditions de durée et de température qui permettent de former, à partir de l'aluminium contenu dans l'alliage, une couche superficielle d'oxyde d'aluminium. Dans le cas des aciers carbonés ou de la fonte, on peut également les prétraiter par recuit du fer ou de l'acier recouvert d'une couche d'aluminium pour obtenir un revêtement d'une couche de diffusion aluminium/fer.

Dans un mode de réalisation préféré de l'invention, la structure du substrat rigide est avantageusement une structure cellulaire en nids d'abeille qui peut être de forme hexagonale, tétragonale, triangulaire ou ondulée, elle doit permettre le passage de gaz dans les canaux ou conduits formés lors de leur fabrication par extrusion, laminage, solidification d'éléments en forme de feuille, etc.

L'invention a également pour objet un procédé de fabrication d'un catalyseur tel que décrit précédemment.

Selon une première variante, ce procédé consiste à mélanger une suspension d'alumine avec un composé de type spinelle, à acidifier le mélange à un pH compris entre 0,2 environ et 4,5 environ, puis à enduire le substrat avec cette solution, à sécher et calciner le produit revêtu et enfin à déposer sur ledit support un précurseur de cérium avant séchage et calcination, puis imprégnation par des solutions de précurseurs des éléments constituant la phase active.

Selon une seconde variante du procédé, le substrat est enduit avec une suspension d'alumine puis calciné. Une solution contenant un précurseur du métal bivalent de la spinelle est imprégnée sur la couche d'alumine, qui est ensuite calcinée pour former la spinelle.

La température de calcination est inférieure à 1.000°C. Le précurseur de cérium est ensuite déposé comme dans la première variante.

Selon une troisième variante du procédé, le précurseur de cérium est additionné directement dans la suspension d'alumine et du composé de type spinelle, avant le revêtement du substrat.

Comme précurseur de cérium, on peut utiliser les sels de cérium décomposables sous l'effet de la chaleur en oxyde de cérium, tels que les nitrates, carbonates, acétates, oxalates, oxyhydroxyde de cérium.

Selon un mode de réalisation préféré de l'invention, le précurseur de cérium est une solution d'oxyhydroxyde de cérium colloïdale.

La troisième variante du procédé permet de supprimer l'étape d'imprégnation ou de dépôt du cérium sur le revêtement d'alumine, ce qui simplifie de manière importante le procédé d'un point de vue pratique et économique.

En outre, l'utilisation d'une solution d'oxyhydroxyde de cérium colloïdale permet d'améliorer les caractéristiques structurales de la couche poreuse et la capacité de stockage de l'oxygène.

D'autres buts, détails et avantages de l'invention apparaîtront plus clairement au vu des exemples donnés ci-dessous uniquement à titre indicatif.

Exemple 1 : art antérieur - préparation d'un catalyseur (A)

On prépare un liant et une charge d'alumine selon le procédé décrit dans la demande de brevet européen n° 73703.

On prépare un liant d'alumine de la façon suivante : 5000 g d'alumine obtenue par deshydratation dans un courant de gaz chaud à 800°C pendant 0,5 seconde, sont introduits dans un autoclave contenant une solution d'acide nitrique à pH = 1. On chauffe la suspension pendant 4 heures à 180°C. La suspension obtenue, qui constitue le liant d'alumine est séchée par atomisation à 105°C. La poudre obtenue présente aux rayons X une structure de boehmite fibrillaire.

Une partie de cette poudre est calcinée sous air à 600°C pendant 2 heures pour obtenir la charge d'alumine.

On disperse 200 g de liant d'alumine sous forme de poudre dans 2000 cm$^3$ d'eau distillée. On ajoute 800 g de charge d'alumine dans cette dispersion. La viscosité de la suspension obtenue est de 25 mPa.s. Cette suspension (1) est utilisée pour le revêtement d'une structure monolithe en céramique de 1,98 litre vendue par la Société CORNING et présentant 62 cellules par cm$^2$. Le monolithe de 1,98 litre est plongé dans la suspension à pH = 3,4 contenant 30 % en poids d'alumine. Le monolithe est égoutté pour que les canaux soient vidés, puis séché et calciné à 600°C durant 3 heures.

Le monolithe enduit est ensuite immergé dans une solution aqueuse de nitrate de cérium puis égoutté, séché à 150°C et calciné à 700°C durant trois heures. La concentration en nitrate de cérium dans la solution est telle que, après immersion et calcination, le monolithe contient 6 % en poids d'oxyde de cérium rapporté à la couche poreuse de revêtement du monolithe. Le substrat est ensuite imprégné par trempage dans une solution aqueuse d'acide hexachloroplatinique. La concentration en acide hexachloroplatinique est telle que le monolithe est imprégné par 2 g de platine. Après 30 minutes de contact, le monolithe est séché à 150°C, puis activé à 500°C pendant 3 heures dans un four de calcination.

Le catalyseur (A) ainsi préparé contient en poids rapporté au catalyseur monolithique 0,2 % de platine et 1,2 % d'oxyde de cérium.

Exemple 2 : art antérieur - préparation d'un catalyseur (B)

On disperse 200 g d'alumine liante (2) commercialisée par la Société RHONE-POULENC CHIMIE sous la référence commerciale EGB 200 dans 2000 cm$^3$ d'eau distillée. On ajoute à cette dispersion, 800 g de charge d'alumine calcinée (2) commercialisée par la Société CONDEA sous la marque commerciale PURALOX®. On introduit 281 g de nitrate céreux dans la suspension d'alumine. La viscosité de la suspension obtenue est de 65 mPa.s. Cette suspension est utilisée pour le revêtement d'une structure monolithe céramique de 0,933 litre, vendue par la Société CORNING, présentant 62 cellules par cm$^2$. Le monolithe est plongé dans la suspension à pH = 3,1.

Le monolithe enduit est égoutté pour que les canaux soient vidés, puis séché et calciné à 600°C durant 3 heures. Le monolithe ainsi revêtu contient 2,8 % en poids d'oxyde de cérium rapporté à la couche poreuse de revêtement. Le substrat est ensuite imprégné par trempage dans 160 ml d'une solution aqueuse d'acide hexachloroplatinique, de chlorure de palladium et de trichlorure de rhodium hydraté contenant 0,5 g de platine, 0,5 g de palladium, et 0,05 g de rhodium.

Le substrat est ensuite activé comme à l'exemple 1.

Le catalyseur (B) ainsi préparé contient en poids rapporté au catalyseur monolithique 0,1 % de platine, 0,1 % de palladium, 0,01 % de rhodium et 0,46 % d'oxyde de cérium.

Exemple 3 : art antérieur - préparation d'un catalyseur (C)

Une spinelle de nickel et d'alumine est préparée selon le brevet US 4 274 981. 300 grammes d'oxyde de nickel Prolabo sont mélangés avec 410 grammes d'alumine CONDEA commercialisée sous la marque Dispural® de surface spécifique égale à 170 m$^2$g$^{-1}$. Les granulométries moyennes respectives de ces deux oxydes sont de 13,5 micromètres et de 17 micromètres. Le mélange de ces deux poudres est porté durant une période de 20 heures dans un four à la température de 1.400°C. Après traitement thermique, le mélange des deux poudres initialement gris, prend une couleur bleue intense. Une analyse en diffraction des rayons X montre qu'un aluminate de nickel a été synthétisé qui contient encore de l'oxyde de nickel NiO. Cet aluminate est ensuite lavé avec 1 litre de solution d'acide nitrique 0,1 N puis avec 2 litres d'eau déminéralisée. Le gâteau ainsi lavé est séché à 300°C pendant 12 heures et broyé afin d'obtenir une taille moyenne des particules de 17 micromètres.

Les caractéristiques texturales de l'aluminate en font un produit relativement dense (volume poreux total de 0,21 cm$^3$ g$^{-1}$ et surface spécifique très faible, inférieure à 1 m$^2$ g$^{-1}$).

Une suspension d'enduction de monolithe est préparée comme à l'exemple 1 du brevet US 274 981 cité en référence. De l'alumine CONDEA DISPURAL® 10/3, de 295 m$^2$g$^{-1}$ de surface spécifique, est dispersée dans de l'eau déminéralisée de manière à obtenir un sol à 10 % poids d'alumine. Ce sol est stabilisé grâce à l'ajout de 2 % d'acide acétique. Une suspension est alors préparée en ajoutant dans 250 cm$^3$ d'eau déminéralisée, 300 grammes de ce sol stabilisé, 45 grammes de $Al(NO_3)_3,9H_2O$, et enfin 500 grammes d'aluminate de nickel préparé selon le brevet cité en référence. La suspension obtenue à une viscosité de 1055 mPa.s au bout d'une heure d'agitation.

L'extrait sec de cette suspension contient 7 % d'alumine et 93 % d'aluminate de nickel. Un monolithe en cordiérite commercialisé par la Société Corning de 0,933 l de volume, comprenant 62 cellules par cm$^2$ de section est enduit avec la suspension préparée, selon le procédé décrit dans le brevet US 4 274 981 cité en référence. Etant donné la viscosité élevée de la suspension, l'enduction est difficile et conduit à un monolithe ayant 13 % de canaux bouchés.

Le poids de revêtement déposé sur le monolithe est de 40 grammes.

La mesure des caractéristiques texturales de l'enduit donne une surface spécifique de 15 m$^2$ g$^{-1}$, ce qui est très faible et ne permet pas une bonne répartition des métaux précieux sur un tel support.

Le monolithe enduit avec une spinelle de nickel et d'aluminium est ensuite plongé dans une solution aqueuse de nitrate céreux.

Puis il est égoutté, séché à 150°C et calciné à 700°C durant 3 heures. La concentration en nitrate de cérium dans la solution est telle que, après imprégnation et calcination, le monolithe contient 10 % en poids d'oxyde de cérium par rapport à la couche poreuse de revêtement. Le substrat est ensuite imprégné par trempage dans une solution aqueuse d'acide hexachloroplatinique et de trichlorure de rhodium hydraté. Les concentrations en acide hexachloroplatinique et en trichlorure de rhodium sont telles que le monolithe est imprégné par 1 g de platine et 0,05 g de rhodium. Après 30 minutes de contact, le monolithe est séché à 150°C, puis activé à 500°C pendant 3 heures dans un four de calcination.

Le catalyseur (C) ainsi préparé contient en poids rapporté au catalyseur monolithique 0,2 % de platine, 0,01 % de rhodium, 2 % d'oxyde de cérium et 6,10 % de nickel.

Exemple 4 : préparation d'un catalyseur (D) selon l'invention

On prépare une solution de nitrate de nickel en dissolvant 2.837 grammes de Ni(NO$_3$), 6 H$_2$O RECTAPUR® dans de l'eau déminéralisée. Cette solution est utilisée pour imprégner à sec 5 000 grammes d'alumine en billes, commercialisée par la Société Rhône-Poulenc Chimie sous la référence commerciale SCM 129X de 184 m$^2$ g$^{-1}$ de surface spécifique. Le produit imprégné est séché à 110°C, calciné à 900°C pendant 6 heures puis broyé. Une analyse quantitative en diffraction des rayons X montre que le produit obtenu ne contient que l'aluminate de nickel, et que la taille moyenne des cristallites est d'environ 5,2 nanomètres. La surface spécifique de cet aluminate est de 92 m$^2$ g$^{-1}$, et son volume poreux total de 0,72 cm$^3$ g$^{-1}$.

On prépare une suspension d'enduction en mélangeant dans une solution aqueuse 25 parts d'une alumine peptisable, commercialisée sous la référence commerciale d'EGB 200 par Rhône-Poulenc Chimie, à 75 parts de l'aluminate de nickel préparé ci-dessus. De l'acide nitrique est ajouté à la suspension afin d'obtenir un rapport HNO$_3$/Al$_2$O$_3$ + Aluminate de 0,9 %. La suspension obtenue de densité 1,360 g/l$^{-1}$, est alors broyée dans un broyeur à microbilles. Après broyage, la viscosité de la suspension est de 16,1 mPa.s.

Un support monolithique, commercialisé par la Société Corning, identique au support utilisé dans l'exemple 2, est enduit avec cette suspension suivant le mode opératoire décrit dans la demande de brevet français n° 2 512 004. Après séchage et calcination, on obtient un substrat qui est recouvert d'un enduit de 96,5 grammes.

Cet enduit contient lui-même 75 % d'aluminate de nickel. La mesure des caractéristiques texturales de l'enduit donne les valeurs suivantes : surface spécifique de 130 m$^2$ g$^{-1}$, et volume poreux total de 0,66 cm$^3$ g$^{-1}$.

On prépare une suspension colloïdale d'oxyhydroxyde de cérium, selon, par exemple, le procédé décrit dans le brevet français n° 2 416 867, par attaque de 100 grammes d'hydroxyde de cérium à 77,9 % en oxyde de cérium, de provenance Rhône-Poulenc Chimie par 120 ml d'une solution aqueuse d'acide nitrique 0,75 N.

Le mélange est ensuite chauffé à 70°C pendant 10 minutes sous agitation. Le précipité d'hydroxyde de cérium formé par cette réaction est séparé de la solution surnageante, puis mis en dispersion dans 200 ml d'eau distillée pour former une suspension colloïdale. Les caractéristiques de la suspension d'hydroxyde de cérium ainsi obtenue sont les suivantes : concentration en CeO$_2$ = 325 g/l$^{-1}$, taille moyenne des colloïdes d'hydroxyde de cérium = 16 nm, pH de la suspension = 1,1.

On plonge le substrat revêtu dans la suspension colloïdale de cérium. La concentration en cérium dans la suspension colloïdale est ajustée de telle façon qu'après immersion et calcination, le monolithe contient 10 g d'oxyde de cérium.

Le monolithe est ensuite égoutté, séché à 150°C et calciné à 700°C pendant 3 heures.

Ce monolithe est ensuite imprégné par trempage dans 160 ml d'une solution aqueuse d'acide hexachloroplatinique, et de trichlorure de rhodium hydraté contenant 1 g de platine et 0,05 g de rhodium.

Le catalyseur est activé comme à l'exemple 1.

Le catalyseur D ainsi préparé contient en poids rapporté au catalyseur monolithique 0,2 % de platine, 0,01 % de rhodium, 2 % d'oxyde de cérium et 4,8 % de nickel.

Exemple 5 : préparation d'un catalyseur (E) selon l'invention

On enduit un substrat monolithique en céramique de 0,933 litre par une alumine selon le procédé décrit à l'exemple 1.

Le monolithe enduit est ensuite immergé dans une solution aqueuse de nitrate de nickel, puis égoutté, séché à 110°C et calciné à 900°C pendant 6 heures. La concentration en nitrate de nickel dans la solution est telle que, après immersion et calcination, le monolithe contient 75 % en poids d'aluminate de nickel par rapport à la couche poreuse de revêtement.

Le substrat est ensuite imprégné par trempage dans 160 ml d'une suspension colloïdale de cérium préparée selon le procédé décrit à l'exemple 4 dont la concentration est ajustée pour qu'après imprégnation et calcination à 400°C, le monolithe contient 5 % en poids d'oxyde de cérium par rapport à la couche poreuse.

Le substrat est ensuite imprégné par trempage dans 160 ml d'une solution aqueuse d'acide hexachloroplatinique, de chlorure de palladium et de trichlorure de rhodium hydraté contenant 0,5 g de platine, 0,5 g de palladium et 0,05 g de rhodium.

Le catalyseur est activé comme à l'exemple 1.

Le catalyseur (E) ainsi préparé contient en poids rapporté au catalyseur monolithique 0,1 % de platine, 0,1 % de palladium, 0,01 % de rhodium, 1 % d'oxyde de cérium et 4,8 % de nickel.

Exemple 6 : préparation d'un catalyseur (F) selon l'invention

On prépare une suspension (6) en mélangeant en solution aqueuse, 911 g de l'aluminate de nickel préparée comme à l'exemple 4, 427 g d'alumine commercialisée par la Société RHONE-POULENC CHIMIE sous la référence commerciale d'EGB 200 et 1.628 $cm^3$ d'une solution aqueuse de cérium colloïdale préparée selon le procédé de l'exemple 4.

De l'acide nitrique est ajouté pour obtenir une viscosité de la suspension de 25,2 mPa.s. Un monolithe en céramique de 0,933 l, commercialisé par la Société CORNING et présentant 62 cellules par $cm^2$, est utilisé pour être revêtu par la suspension ainsi préparée Le support précédemment cité est égoutté pour que les canaux soient vidés, séchés puis calciné à 600°C durant 1,5 heure. Le dépôt obtenu est de 125 g/l$^{-1}$. La concentration de la suspension en cérium est telle que, après immersion et calcination, le monolithe contient 10 % de cérium (comptés en $CeO_2$) dans la couche poreuse de revêtement. Ce support monolithique a une surface spécifique de 34 $m^2$ $g^{-1}$ et un volume poreux total de 0,31 $cm^3$ $g^{-1}$. L'enduit, lui-même de 118 $m^2$ $g^{-1}$ de surface spécifique et de 0,63 $cm^3$ $g^{-1}$ de volume poreux total contient 50 % d'aluminate de nickel.

Le substrat (E) est ensuite imprégné par 160 ml d'une solution d'acide hexachloroplatinique et de chlorure de palladium contenant 0,5 g de platine et 0,5 g de palladium. Le catalyseur est ensuite activé comme à l'exemple 1.

Le catalyseur (F) ainsi préparé contient en poids rapporté au catalyseur monolithique 0,1 % de platine, 0,1 % de palladium, 2 % d'oxyde de cérium et 3,3 % de nickel.

Exemple 7 : activité des divers catalyseurs mesurés sur mélange synthétique

Le présent exemple rassemble les résultats obtenus pour l'épuration du CO, de $C_3H_6$ et de $NO_x$ d'un mélange synthétique avec les divers catalyseurs (A), (B), (C), (D), (E) et (F) décrits respectivement dans les exemples 1 à 6.

Les performances sur les catalyseurs décrits dans les exemples 1 à 6 et les teneurs en soufre déposé sont déterminées après vieillissement pendant 2 heures à 750°C dans un débit gazeux de 300 l/h d'un mélange synthétique contenant 1 % de $SO_2$, 4 % d'oxygène et 95 % d'azote.

Les teneurs pondérales en soufre déposées sur chaque catalyseur sont déterminées par fluorescence X sur des échantillons des catalyseurs (A), (B), (C), (D), (E) et (F) vieillis et obtenus par broyage à 50 $\mu$m des échantillons.

Les performances des catalyseurs décrits dans les exemples 1 à 6 sont déterminées selon la procédure décrite ci-après.

- Mesure des performances en cycle thermique de 200 à 500°C

L'échantillon du catalyseur est préalablement porté sur un banc de mesure à la température de 200°C et soumis à un flux gazeux de débit constant et de composition :

7

| - CO | 1,5 % |
|---|---|
| - $O_2$ | 0,75 % |
| - $H_2O$ | 13 % |
| - $C_3H_6$ | 0,04 % |
| - $NO_x$ | 0,2 % |
| - $CO_2$ | 13 % |
| - Azote : complément | |

Le débit gazeux est ainsi défini de façon à avoir une vitesse volumique horaire de 100.000 $h^{-1}$ dans le catalyseur.

Le principe du test multifonctionnel utilisé est le suivant :

- On porte le catalyseur à une température donnée $T_1$, par exemple 200°C et on détermine par chromatographie en phase gazeuse la teneur en $C_3H_6$, par un analyseur spécifique de marque COSMA la teneur en CO et par un analyseur spécifique de marque THERMOELECTRON la teneur en $NO_x$ dans le gaz sortie réacteur. On déduit les pourcentages de conversion obtenus sur le catalyseur examiné à la température d'entrée $T_1$ par les relations :

$$CO_{(\% \text{ conversion}) T1} = \frac{\% \text{ CO initial} - (\% \text{ CO dosé}) T_1}{\% \text{ CO initial}} \times 100$$

$$C_3H_{6(\% \text{ conversion}) T1} = \frac{\% \text{ } C_3H_6 \text{ initial} - (\% \text{ } C_3H_6 \text{ dosé}) T_1}{\% \text{ } C_3H_6 \text{ initial}} \times 100$$

$$NO_{x(\% \text{ conversion}) T1} = \frac{\% \text{ } NO_x \text{ initial} - (\% \text{ } NO_x \text{ dosé}) T_1}{\% \text{ } NO_x \text{ initial}} \times 100$$

- On porte ensuite le catalyseur de 200°C à 500°C en 1 heure en programmation linéaire de température et on détermine en continu les pourcentages de conversion de CO, $C_3H_6$ et de $NO_x$.
  . Les efficacités du catalyseur vis-à-vis de l'oxydation du CO et de $C_3H_6$ et de la réduction des oxydes d'azote sont calculées par les relations du type :

$$E_{CO} \ \% = 100 \ \begin{cases} T = 500°C \\ \\ T = 200°C \end{cases} \quad \% \ \text{conversion de CO}$$

$$E \ C_3H_6 \ \% = 100 \ \begin{cases} T = 500°C \\ \\ T = 200°C \end{cases} \quad \% \ \text{conversion de } C_3H_6$$

$$E_{NOx} \ \% = 100 \ \begin{cases} T = 500°C \\ \\ T = 200°C \end{cases} \quad \% \ \text{conversion de NO}$$

. Le tableau ci-après rassemble les résultats obtenus avec les divers catalyseurs (A), (B), (C), (D), (E), et (F) décrits respectivement dans les exemples 1 à 6.

Tableau 1

| | N° Ex. | Référence du catalyseur | Teneur pondérale en soufre S % poids | Efficacité des catalyseurs en cycles thermiques de 200 à 500°C en % | | |
|---|---|---|---|---|---|---|
| | | | | CO | $C_3H_6$ | $NO_x$ |
| Art antérieur | 1 | A | 8,3 | 77,3 | 71,7 | 20,5 |
| | 2 | B | 7 | 75,4 | 70,5 | 35,1 |
| | 3 | C | 5,1 | 60,5 | 55,2 | 37,5 |
| invention | 4 | D | 2,4 | 83,3 | 87,6 | 55,5 |
| | 5 | E | 2,5 | 80,4 | 77,5 | 50,5 |
| | 6 | F | 2,6 | 87,5 | 89,7 | 30,5 |

On peut constater que les catalyseurs (D), (E) et (F) préparés selon l'invention sont améliorés par rapport aux catalyseurs (A), (B) et (C) préparés selon l'art antérieur tant du point de vue résistance à l'empoisonnement par le soufre que du point de vue stabilité de l'activité.

**Revendications**

1. Support de catalyseur pour le traitement des gaz d'échappement des moteurs à combustion interne du type comprenant un substrat revêtu par une couche poreuse sur laquelle est imprégné une phase catalytiquement active, caractérisé en ce que la couche poreuse comprend de l'alumine, au moins un oxyde de terre rare, et un composé de type spinelle présentant une surface spécifique au moins égale à 50 m²/g, et ayant pour formule $M^1 \ Al_2 \ O_4$, dans laquelle $M^1$ représente un élément métallique divalent choisi dans le groupe constitué par le magnésium, le zinc, le nickel et le cobalt, les concentrations de ladite couche poreuse en alumine, en oxyde de terres rares et en composé de type spinelle étant comprises respectivement entre 15 et 40 %, entre 1 et 25 % et entre 35 et 84 %, exprimées en % en poids à sec après calcination à 1000°C pendant 4 heures.

2. Support de catalyseur selon la revendication 1, caractérisé en ce que le composé de type spinelle a une surface spécifique comprise entre 50 m²/g et 300 m²/g.

3. Support de catalyseur selon la revendication 1 ou 2 caractérisé en ce que la concentration en composé de type spinelle dans la couche poreuse est comprise entre 40 % et 75 %.

**4.** Support de catalyseur selon l'une des revendications précédentes, caractérisé en ce que la concentration en alumine activée dans la couche poreuse est comprise entre 20 % et 40 %.

**5.** Support de catalyseur selon l'une des revendications précédentes, caractérisé en ce que la concentration en oxyde de terres rares est comprise entre 5 % et 20 %.

**6.** Support de catalyseur selon l'une des revendications précédentes, caractérisé en ce que l'élément métallique divalent $M^1$ est le nickel ou le cobalt.

**7.** Support de catalyseur selon l'une des revendications précédentes, caractérisé en ce que l'oxyde de terre rare est l'oxyde de cérium.

**8.** Support de catalyseur selon l'une des revendications précédentes, caractérisé en ce que le substrat est métallique ou en matière céramique.

**9.** Support de catalyseur selon l'une des revendications précédentes, caractérisé en ce que le substrat est un matériau inerte de forme monolithique, à structure cellulaire.

**10.** Catalyseur comprenant un support de catalyseur selon l'une des revendications précédentes caractérisé en ce qu'il comprend une phase catalytiquement active imprégnée sur la couche poreuse du support, ladite phase active comprenant au moins un métal précieux choisi dans le groupe comprenant le platine, la palladium, le rhodium, l'irridium.

**11.** Catalyseur selon la revendication 10, caractérisé en ce que la phase catalytiquement active comprend au moins un élément additionnel choisi dans le groupe comprenant le fer, le zirconium, le vanadium, le chrome, le germanium, le cobalt, l'uranium, le rhénium, les terres rares.

**12.** Utilisation d'un catalyseur selon l'une des revendications 10 et 11 comme catalyseur multifonctionnel.

**13.** Utilisation d'un catalyseur selon l'une des revendications 10 et 11 comme catalyseur d'oxydation.

**14.** Procédé de fabrication d'un catalyseur selon l'une des revendications 10 et 11 caractérisé en ce qu'il consiste à :
- mélanger une suspension d'alumine avec le composé de type spinelle présentant une surface spécifique au moins égale à 50 $m^2$/g,
- à acidifier le mélange à un pH inférieur à 4,
- à enduire le substrat par cette solution,
- à sécher et calciner le produit revêtu,
- à déposer un précurseur de cérium,
- à sécher et calciner le produit revêtu,
- et à imprégner une phase catalytiquement active.

**15.** Procédé de fabrication d'un catalyseur selon l'une des revendications 10 et 11 caractérisé en ce qu'il consiste à :
- enduire un substrat avec une suspension d'alumine,
- à sécher et calciner ledit substrat,
- à imprégner le produit revêtu avec une solution d'un précurseur du métal divalent de la spinelle
- à calciner ledit produit à une température inférieure à 1000°C jusqu'à obtention du composé de type spinelle présentant une surface spécifique au moins égale à 50 $m^2$/g,
- à déposer un précurseur de cérium sur le revêtement du substrat,
- à sécher et calciner le produit avant imprégnation de la phase catalytiquement active.

**16.** Procédé de fabrication d'un catalyseur selon l'une des revendications 10 et 11 caractérisé en ce qu'il consiste à :
- mélanger une suspension d'alumine avec un composé de type spinelle présentant une surface spécifique au moins égale à 50 $m^2$/g, et un précurseur de l'oxyde de cérium,
- à acidifier le mélange à un pH inférieur à 4,
- à enduire le substrat par cette solution,

EP 0 333 559 B1

- à sécher et calciner le produit revêtu,
- et à imprégner une phase catalytiquement active.

## Claims

1. Catalyst support for the treatment of internal combustion engine exhaust gases, of the type comprising a substrate coated with a porous layer onto which a catalytically active phase is impregnated, characterized in that the porous layer comprises alumina, at least one rare-earth oxide and a compound of spinel type which has a specific surface of at least 50 $m^2$/g and which has the formula $M^1Al_2O_4$, in which $M^1$ denotes a divalent metallic element chosen from the group consisting of magnesium, zinc, nickel and cobalt, the concentrations of alumina, of rare-earth oxide and of compound of spinel type in the said porous layer being between 15 and 40 %, between 1 and 25 % and between 35 and 84 % respectively, expressed in % by weight on dry basis after calcination at 1000 °C for 4 hours.

2. Catalyst support according to Claim 1, characterized in that the compound of spinel type has a specific surface of between 50 $m^2$/g and 300 $m^2$/g.

3. Catalyst support according to Claim 1 or 2, characterized in that the concentration of compound of spinel type in the porous layer is between 40 % and 75 %.

4. Catalyst support according to one of the preceding claims, characterised in that the concentration of activated alumina in the porous layer is between 20 % and 40 %.

5. Catalyst support according to one of the preceding claims, characterized in that the concentration of rare-earth oxide is between 5 % and 20 %.

6. Catalyst support according to one of the preceding claims, characterized in that the divalent metallic element $M^1$ is nickel or cobalt.

7. Catalyst support according to one of the preceding claims, characterized in that the rare-earth oxide is cerium oxide.

8. Catalyst support according to one of the preceding claims, characterized in that the substrate is metallic or made of ceramic material.

9. Catalyst support according to one of the preceding claims, characterized in that the substrate is made of an inert material of monolithic form, with cellular structure.

10. Catalyst comprising a catalyst support according to one of the preceding claims, characterized in that it comprises a catalytically active phase impregnated on to the porous layer of the support, the said active phase comprising at least one precious metal chosen from the group comprising platinum, palladium, rhodium and iridium.

11. Catalyst according to Claim 10, characterized in that the catalytically active phase comprises at least one additional element chosen from the group comprising iron, zirconium, vanadium, chromium, germanium, cobalt, uranium, rhenium and the rare earths.

12. Use of a catalyst according to either of Claims 10 and 11 as a multifunctional catalyst.

13. Use of a catalyst according to either of Claims 10 and 11 as an oxidation catalyst.

14. Process for the manufacture of a catalyst according to either of Claims 10 and 11, characterised in that it consists in:
    - mixing a suspension of alumina with a compound of spinel type exhibiting a specific surface of at least 50 $m^2$/g,
    - acidifying the mixture to a pH lower than 4,
    - coating the substrate with this solution,
    - drying and calcining the coated product,

11

- depositing a cerium precursor,
- drying and calcining the coated product,
- and impregnating a catalytically active phase.

**15.** Process for the manufacture of a catalyst according to either of Claims 10 and 11, characterized in that it consists in:
- coating a substrate with an alumina suspension,
- drying and calcining the said substrate,
- impregnating the coated product with a solution of a precursor of the divalent metal of the spinel
- calcining the said product at a temperature lower than 1000 °C until the compound of spinel type exhibiting a specific surface of at least 50 m$^2$/g is obtained,
- depositing a cerium precursor on the coating of the substrate,
- drying and calcining the product before impregnation of the catalytically active phase.

**16.** Process for the manufacture of a catalyst according to either of Claims 10 and 11, characterized in that it consists in:
- mixing a suspension of alumina with a compound of spinel type exhibiting a specific surface of at least 50 m$^2$/g and a precursor of cerium oxide,
- acidifying the mixture to a pH lower than 4,
- coating the substrate with this solution,
- drying and calcining the coated product,
- and impregnating a catalytically active phase.

**Patentansprüche**

**1.** Katalysatorträger für die Behandlung des Abgases von Verbrennungsmotoren, der ein Substrat beinhaltet, das mit einer porösen Schicht überzogen ist, die mit einer katalytisch aktiven Phase imprägniert ist, dadurch gekennzeichnet, daß die poröse Schicht aus folgenden Materialien besteht: Aluminiumoxid, mindestens einem Oxid der seltenen Erden und einer Verbindung des Typs Spinell, die eine spezifische Oberfläche von mindestens 50 m$^2$/g und die Formel M$^1$Al$_2$O$_4$ hat, in der M$^1$ ein zweiwertiges Metall darstellt, welches aus der Gruppe Magnesium, Zink, Nickel und Kobalt gewählt wird. Dabei bewegen sich die Konzentrationen des Aluminium oxids, des Oxids der seltenen Erden und der Verbindung vom Typ Spinel in der porösen Schicht zwischen 15 und 40 %, bzw. zwischen 1 und 25 % und zwischen 35 und 84 % (ausgedrückt als % Trockengewicht nach vierstündigem Glühen bei 1000 °C).

**2.** Katalysatorträger nach Anspruch 1, dadurch gekennzeichnet, daß die Verbindung vom Typ Spinell eine spezifische Oberfläche besitzt, die zwischen 50 und 300 m$^2$/g liegt.

**3.** Katalysatorträger nach den Ansprüchen 1 oder 2, dadurch gekennzeichnet, daß die Konzentration der Verbindung vom Typ Spinell in der porösen Schicht zwischen 40 und 75 % liegt.

**4.** Katalysatorträger nach einem der vorhergehenden Ansprüche, dadurch gekennzeichnet, daß die Konzentration von aktiviertem Aluminiumoxid in der porösen Schicht zwischen 20 und 40 % liegt.

**5.** Katalysatorträger nach einem der vorhergehenden Ansprüche, dadurch gekennzeichnet, daß die Konzentration des Oxids der seltenen Erden zwischen 5 und 20 % liegt.

**6.** Katalysatorträger nach einem der vorhergehenden Ansprüche, dadurch gekennzeichnet, daß das zweiwertige Metall M$^1$ Nickel oder Cobalt ist.

**7.** Katalysatorträger nach einem der vorhergehenden Ansprüche, dadurch gekennzeichnet, daß das Oxid der seltenen Erden Ceroxid ist.

**8.** Katalysatorträger nach einem der vorhergehenden Ansprüche, dadurch gekennzeichnet, daß das Substrat metallisch ist oder aus keramischem Werkstoff besteht.

**9.** Katalysatorträger nach einem der vorhergehenden Ansprüche, dadurch gekennzeichnet, daß das Substrat ein inertes Material monolithischer Form mit zellulärer Struktur ist.

**10.** Katalysator, der nach einem der vorhergehenden Ansprüche einen Katalysatorträger mit einschließt, dadurch gekennzeichnet, daß er eine katalytisch aktive Phase enthält, mit der die poröse Schicht des Trägers imprägniert ist, und daß die aktive Phase mindestens ein Edelmetall enthält, das aus der Gruppe Platin, Palladium, Rhodium und Iridium stammt.

**11.** Katalysator nach Anspruch 10, dadurch gekennzeichnet, daß die katalytisch aktive Phase mindestens ein zusätzliches Element enthält, das aus der Gruppe Eisen, Zirconium, Vanadium, Chrom, Germanium, Cobalt, Uran, Rhenium und den seltenen Erden gewählt wird.

**12.** Einsatz eines Katalysators als multifunktionalen Katalysator nach einem der Ansprüche 10 und 11.

**13.** Einsatz eines Katalysators als Oxidationskatalysator nach einem der Ansprüche 10 und 11.

**14.** Verfahren zur Herstellung eines Katalysators nach einem der Ansprüche 10 und 11. dadurch gekennzeichnet, daß
- eine Aluminiumoxidsuspension mit der Verbindung vom Typ Spinell, die eine spezifische Oberfläche von mindestens 50 $m^2$/g besitzt, vermischt wird,
- die Mischung auf einen pH-Wert unterhalb 4 angesäuert wird,
- das Substrat mit dieser Lösung überzogen wird,
- das beschichtete Produkt getrocknet und geglüht wird,
- eine Zwischenstufe von Cer aufgetragen wird,
- das überzogene Produkt getrocknet und geglüht wird,
- eine katalytisch aktive Phase aufgebracht wird.

**15.** Verfahren zur Herstellung eines Katalysators nach einem der Ansprüche 10 und 11, dadurch gekennzeichnet, daß
- ein Substrat mit einer Aluminiumoxidsuspension überzogen wird
- das Substrat getrocknet und geglüht wird,
- das beschichtete Produkt mit einer Lösung der Vorstufe des zweiwertigen Metalls im Spinell imprägniert wird,
- das genannte Produkt bei einer Temperatur unterhalb von 1000 °C geglüht wird, bis eine Verbindung vom Typ Spinell erhalten wird, die eine spezifische Oberläche von mindestens 50 $m^2$/g aufweist,
- eine Zwischenstufe des Cers auf die Beschichtung des Substrats aufgetragen wird,
- das Produkt vor der Imprägnierung der katalytisch aktiven Phase getrocknet und geglüht wird.

**16.** Verfahren zur Herstellung eines Katalysators nach einem der Ansprüche 10 und 11, dadurch gekennzeichnet, daß
- eine Suspension aus Aluminiumoxid mit einer Verbindung vom Typ Spinell, die eine spezifische Oberfläche von mindestens 50 $m^2$/g aufweist, und der Vorstufe des Ceroxids gemischt wird,
- die Mischung auf einen pH-Wert unterhalb von 4 angesäuert wird,
- das Substrat mit dieser Lösung bestrichen wird,
- das beschichtete Produkt getrocknet und geglüht wird,
- eine katalytisch aktive Phase aufgebracht wird.